(19) **Europäisches Patentamt / European Patent Office / Office européen des brevets**

(11) **EP 2 281 769 B1**

(12) **EUROPEAN PATENT SPECIFICATION**

(45) Date of publication and mention
of the grant of the patent:
**01.05.2013 Bulletin 2013/18**

(51) Int Cl.:
**B66C 13/54** (2006.01)     **B66C 19/00** (2006.01)
**B66F 17/00** (2006.01)

(21) Application number: **10171000.2**

(22) Date of filing: **28.07.2010**

(54) **Operator's cabin for a straddle carrier**

Fahrerkabine für einen Portalhubwagen

Cabine d'opérateur pour chariot cavalier

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **05.08.2009 FI 20095826**

(43) Date of publication of application:
**09.02.2011 Bulletin 2011/06**

(73) Proprietor: **Cargotec Finland Oy**
**33900 Tampere (FI)**

(72) Inventor: **Nurmi, Jorma**
**FI-33400, Tampere (FI)**

(74) Representative: **Papula Oy**
**P.O. Box 981**
**00101 Helsinki (FI)**

(56) References cited:
**WO-A1-02/18262     US-A1- 2003 111 281**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

BRANCH OF TECHNOLOGY

The invention relates to straddle carriers used in the handling of containers in ports and terminals. More particularly, the invention concerns an operator's cabin for a straddle carrier, which straddle carrier comprises a portal frame, to which belong essentially vertical supporting pillars and a top frame connecting them at the top, and on each side of the straddle carrier at the bottom end of the supporting pillars there are wheels carrying the portal frame, whereby the operator's cabin is mounted in the front part of the straddle carrier carried by the top frame on one side of the straddle carrier's centre line in the driving direction.

STATE OF THE ART

Freight goods can be transported conveniently in containers from the dispatcher/manufacturer of the goods directly to the buyer/recipient without any special stages in between. When the transportation distances are long, the critical points of the transportation are located at points, where the manner of transporting the containers changes, such as in ports, where large numbers of containers must be unloaded, placed in intermediate storage and reloaded for another manner of transportation. In ports especially the objective is to achieve as short a loading/unloading time as possible, because it is expensive to have ships idle in berth and it is even more expensive, if the loading/unloading is delayed for some reason thus making the ship late in her route schedule. If a ship must sail fast on her route to make up for the delay, she has to use a higher and less economic travelling speed, whereby the fuel consumption and fuel costs will be higher than calculated. This means that loading and unloading of the vessel must be done as quickly as possible and without any additional delays and disturbances.

The effort to achieve as short a loading/unloading time as possible causes some pressures on the operators of container handling equipment, who have to perform the moving of containers as quickly as possible. In these work duties, too, hurry is a risk factor, and it is an objective to minimize risks occurring in the work with various exact instructions for the operator and, for example, with warning devices mounted on straddle carriers. In spite of the operator's instructions and the warning devices, there is a risk of falling over when operating a straddle carrier. A significant factor regarding this risk of falling over is the straddle carrier's structure, because the straddle carrier's height is considerable in relation to the straddle carrier's width. The operator's instructions pay special attention to this tendency to fall over, but nevertheless the operator's carelessness in cornering situations has been a main factor in actual falling-over accidents. Constant efforts are being made to prevent falling-over situations entirely, such a driver protection structure and a device supporting the same is known from US 2003 0 111 281 A1.

However, operators present wishes for such solution models, where injuries to the operator could be minimized when a falling-over situation occurs. In straddle carriers equipped with a so-called front operator's cabin the worst situation is the machine's falling over to the right, whereby the operator will hit the steering wheel. This is because in the straddle carrier's operator's cabin the operator sits sideways, so that his "facing direction" is to the right in relation to the main driving direction. However, with the present constructions it is also dangerous to fall over to the left.

In order to improve safety in falling-over situations, airbag solutions have also been studied, but they have been found to be an unreliable solution as a whole, and it is also quite expensive to develop them. This is why no solution suitable for use has been developed, at least not to date.

SUMMARY OF THE INVENTION

It is an objective of the present invention to bring about a solution of a new kind to improve the safety of the straddle carrier's operator's cabin in possible falling-over situations. To achieve this objective the invention is primarily **characterized in that** the operator's cabin is mounted resting on the straddle carrier's top frame with the aid of a separate intermediate frame, which in a situation where the straddle carrier falls over and the portal frame hits the ground can move in the straddle carrier's transverse direction, and which intermediate frame is equipped with a brake device or with other such brake devices in order to receive and absorb the operator's cabin's kinetic energy and in order to bring about a controlled movement and a decelerating force for the operator's cabin before the movement is stopped in a situation where the straddle carrier is falling over.

In order to allow the operator's cabin to move in the transverse direction, at least one slide guide bar extending in the horizontal direction and in the straddle carrier's transverse direction is preferably mounted and attached to the straddle carrier's top frame, and the intermediate frame is equipped with at least one sliding wagon, which is mounted to move along the slide guide bar.

The brake device is a friction brake based on frictional force and designed in a situation where the straddle carrier falls over to turn the kinetic energy of the operator's cabin into thermal energy owing to the braking of the distance of travel with the aid of slide guide bars. The brake device is suitably a mechanically loaded friction brake, most suitably a spring-loaded friction brake. In the direction of the shortest possible distance of travel of the operator's cabin, the frictional force produced by the brake device is higher than in the direction of the opposite possible distance of travel.

The invention brings about significant advantages compared with the known technology. Since with the present know-how it is not possible to eliminate entirely the straddle carrier's risk of falling over, the present invention utilizes even as a starting point this straddle carrier's risk of falling over to one side, that is, to the right/to the left. In addition, the invention is based on a new kind of suspension for the operator's cabin, which offers possibilities that in order to solve the matter are utilized in a simple and reliable manner.

Other advantages and characteristic features of the invention will emerge from the following detailed description of the invention, in which the invention is explained by referring to the figures in the appended drawing, although the invention is not restricted to their details only.

BRIEF DESCRIPTION OF THE FIGURES

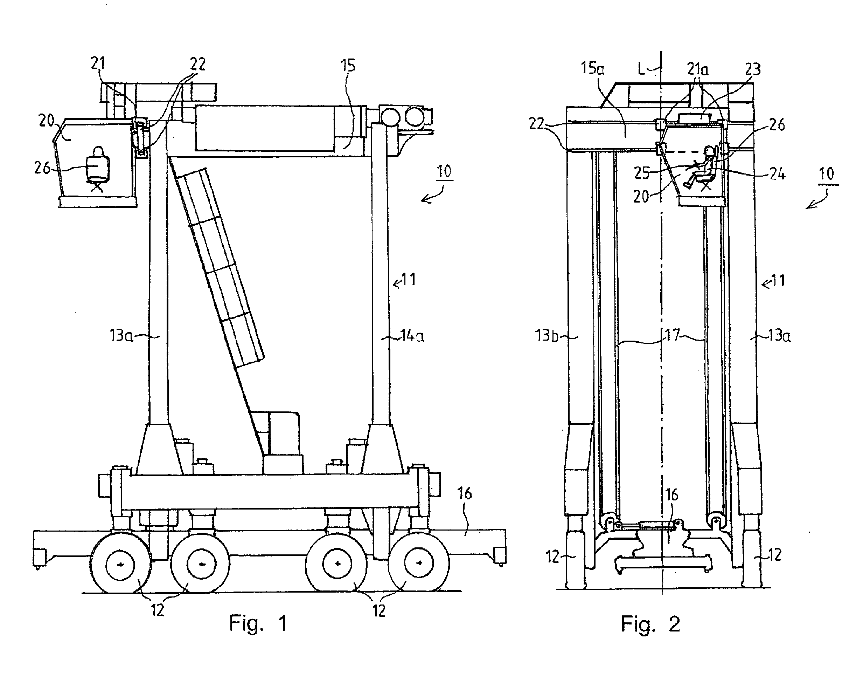

Figure 1 is an overall view from the side of the straddle carrier according to the invention.

Figure 2 is a corresponding view from the front of the straddle carrier shown in Figure 1.

Figure 3 is a schematic and simplified presentation of the straddle carrier seen from the front without a container spreader and hoisting mechanism, showing the straddle carrier in an upright position as well as having fallen to the right and similarly to the left.

DETAILED DESCRIPTION OF ADVANTAGEOUS EMBODIMENTS

In the figures of the drawing, the straddle carrier is indicated generally by the reference number 10. The straddle carrier 10 comprises a portal frame 11, to which belong essentially vertical supporting pillars 13a, 13b, 14a, 14b and a top frame 15 connecting them at the top. On each side of the straddle carrier 10 at the bottom end of the supporting pillars 13a, 13b, 14a, 14b there are wheels 12 carrying the portal frame 11. The straddle carrier 10 is also equipped with a container spreader 16, which is connected by lifting ropes 17 to a lifting mechanism (not shown) supported on the top frame 15.

In the figures, the operator's cabin of the straddle carrier 10 is indicated by reference mark 20. The operator's cabin 20 is a so-called front operator's cabin, which is located in the front part of straddle carrier 10 carried by top frame 15 on the left side of the straddle carrier's 10 centre line L. The operator 24 sits in a transverse position in operator's cabin 20 in such a way that the operator's face is directed towards the straddle carrier's 10 centre line L. The control console and the steering wheel 25 are located in front of the operator 24. The backrest of seat 26 is behind the operator in the direction of the left side of straddle carrier 10.

The operator's cabin 20 is attached to a separate intermediate frame 21, which is equipped with a sliding wagon 21a. Correspondingly, horizontal slide guide bars 22, which are in a transverse direction to the straddle carrier 10, are attached to the straddle carrier's 10 top frame 15, to the front part of the top frame, for example, to a transverse beam 15a of the top frame's front part 22. The sliding wagons 21a of the intermediate frame 21 are mounted on slide guide bars 22 in a transverse direction allowing the intermediate frame 21 and the operator's cabin 20 attached to it to move in the straddle carrier's 10 transverse direction carried by the slide guide bars 22. The plural form was used in the foregoing for the sliding wagons 21a and the slide guide bars 22, but such a structure is also possible, in which there is only one sliding wagon and/or slide guide bar.

The intermediate frame 21 is further equipped with a brake device 23 or with corresponding brake devices, with the aid of which the operator's cabin's 20 lateral movement, that is, a movement in the straddle carrier's 10 transverse direction along the slide guide bars 22 is prevented in the straddle carrier's normal working position. In a situation where the straddle carrier (10) is falling over, the brake devices (23) will receive and absorb the operator's cabin's (20) kinetic energy and bring about a controlled movement and decelerating force for the operator's cabin (20) before the movement stops. The brake device 23 is a friction brake, which is dimensioned so that the frictional force it causes brings about a controlled movement for the operator's cabin 20 before the stop in a situation where the straddle carrier is falling over. Thus, when the straddle carrier 10 is falling over, that is, in a situation where it is crashing to the ground, the kinetic energy of the operator's cabin 20 is absorbed as thermal energy owing to the frictional force. The friction brake is preferably a mechanically loaded, especially a spring-loaded brake. The decelerating frictional force of brake device 23 can be dimensioned in a modular manner to correspond to the structural height the straddle carrier 10 in an optimum manner. In straddle carriers having a different structural height, for example, in those making 2, 3 and 4 tiers, the necessary frictional forces also vary.

The principle is quite simple, that is

$$\tfrac{1}{2} \cdot m \cdot v^2 = F \cdot s$$

, wherein
m = mass of the operator's cabin + the operator
v = crashing speed to the ground
F = frictional force
s = distance travelled by the operator's cabin on the slide guide bars

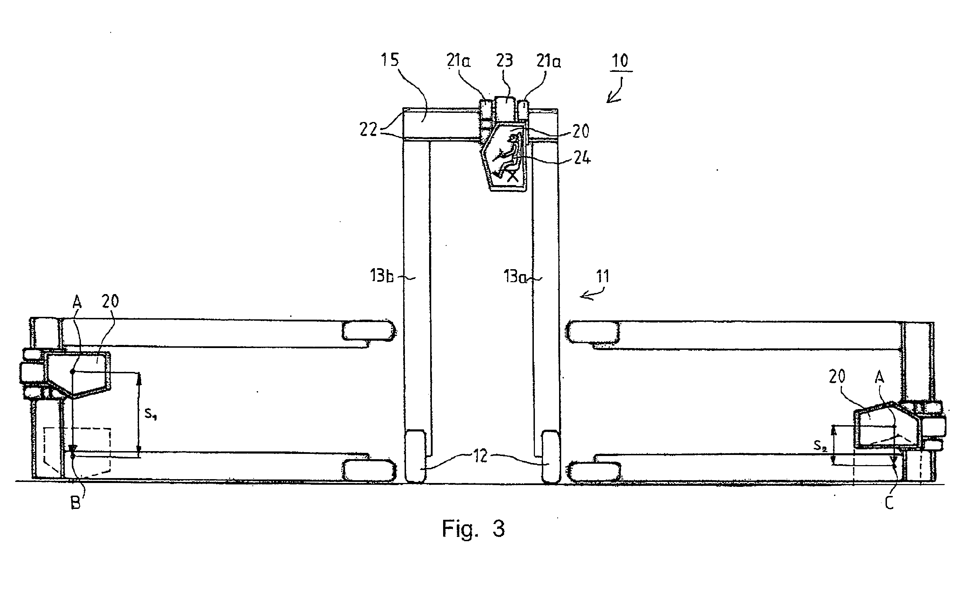

As is shown in Figure 3, the operator's cabin's 20 distance of travel $s_1$ from point A to point B to the right side of straddle carrier 10, as the straddle carrier is falling over to the right, is relatively long, that is, about 2...2.5 m with a normally dimensioned straddle carrier. With this distance of travel, the deceleration of operator's cabin 20 is quite moderate, which means that the deceleration is in an order of 3 ...4 g, wherein g = gravitational acceleration. A deceleration of this order will no longer cause any badly hazardous situation for the operator 24, who is attached with a safety belt to the seat 26 frame. When the straddle carrier 10 falls over to the left, that is, backwards seen from the operator's 24 viewpoint, the operator's cabin's 20 possible distance of travel $S_2$ from point A to point C is shorter, about 0.7...0.8 m, which leads to a higher deceleration. In this direction, the frictional force produced by the brake device is thus in fact higher than in the opposite direction. On the other hand, the backrest and head support of seat 26 will allow a higher horizontal force without the operator becoming badly injured.

In the foregoing, the invention was described by way of example by referring to the figures of the appended drawing. However, the invention is not restricted to concern only the examples shown in the figures, but different embodiments of the invention can vary within the scope of the inventive idea defined in the appended claims.

## Claims

1. Operator's cabin for a straddle carrier, which straddle carrier (10) comprises a portal frame (11), to which belong essentially vertical supporting pillars (13a, 13b, 14a, 14b), and a top frame (15) connecting them at the top, and on each side of the straddle carrier (10) at the bottom end of the supporting pillars (13a, 13b, 14a, 14b) there are wheels (12) carrying the portal frame (11), whereby the operator's cabin (20) is mounted in the front part of the straddle carrier (10) resting on the top frame (15) on one side of the straddle carrier's (10) centre line (L) in the driving direction, **characterized in that** the operator's cabin (20) is mounted to rest on the top frame (15) of the straddle carrier (10) with the aid of a separate intermediate frame (21), which in a situation where the straddle carrier (10) is falling over and the portal frame (11) is crashing to the ground is allowed to move in the straddle carrier's transverse direction, and which intermediate frame (21) is equipped with a brake device (23) or with corresponding brake devices to receive and absorb the kinetic energy of the operator's cabin (20) and to bring about a controlled movement and a decelerating force for the operator's cabin before the movement stops in a situation where the straddle carrier (10) is falling over.

2. Operator's cabin according to claim 1 for a straddle carrier, **characterized in that** to the straddle carrier's (10) top frame (15) is mounted and attached at least one slide guide bar (22) extending in the horizontal direction and in the straddle carrier's (10) transverse direction (22), and that the intermediate frame (21) is equipped with at least one sliding wagon (21a), which is mounted to move along the slide guide bar (22).

3. Operator's cabin according to claim 1 or 2 for a straddle carrier, **characterized in that** the brake device (23) is a friction brake based on frictional force, which in a situation where the straddle carrier (10) is falling over is arranged to turn the kinetic energy of the operator's cabin (20) into thermal energy owing to the braked distance of travel by the guide bars (22).

4. Operator's cabin according to some preceding claim for a straddle carrier, **characterized in that** the brake device (23) is a mechanically loaded friction brake.

5. Operator's cabin according to some preceding claim for a straddle carrier, **characterized in that** the brake device (23) is a spring-loaded friction brake.

6. Operator's cabin according to some claim 3 - 5 for a straddle carrier, **characterized in that** in the direction of the operator's cabin's (20) shortest possible distance of travel the frictional force brought about by the brake device (23) is higher than in the direction of the opposite possible distance of travel.

## Patentansprüche

1. Führerkabine für einen Portalhubwagen, wobei der Portalhubwagen (10) einen Portalrahmen (11) aufweist, zu dem im Wesentlichen vertikale Stützpfeiler (13a, 13b, 14a, 14b) und ein sie an der Oberseite verbindender oberer Rahmen (15) gehören, wobei auf jeder Seite des Portalhubwagens (10) am unteren Ende der Stützpfeiler (13a, 13b, 14a, 14b) den Portalrahmen (11) tragende Räder (12) vorhanden sind, wobei die Führerkabine (20) im vorderen Teil des auf dem oberen Rahmen (15) ruhenden Portalhubwagens (10) auf einer Seite der Mittellinie (L) des Portalhubwagens (10) in der Antriebsrichtung montiert ist, **dadurch gekennzeichnet, dass** die Führerkabine (20) so montiert wird, dass sie auf dem oberen Rahmen (15) des Portalhubwagens (10) mit Hilfe eines getrennten Zwischenrahmens (21) ruht, der in einer Situation, bei der der Portalhubwagen (10) umkippt und der Portalrahmen (11) auf den Boden kracht, sich in die Querrichtung des Portalhubwagens bewegen kann, wobei der Zwischenrahmen (21) mit einer Bremsvorrichtung (23) oder mit entsprechenden Bremsvorrichtungen ausgerüstet ist, um die Bewegungsenergie der Führerkabine (20) aufzunehmen und zu absorbieren sowie eine gesteuerte Bewegung und eine Bremskraft für die Führerkabine zu bewirken, bevor die Bewegung in einer Situation unterbrochen wird, wo der Portalhubwagen (10) umkippt.

2. Führerkabine nach Anspruch 1 für einen Portalhubwagen, **dadurch gekennzeichnet, dass** an dem oberen Rahmen (15) des Portalhubwagens (10) zumindest eine Gleitschiene (22) montiert und befestigt ist, die sich in waagerechter Richtung und in Querrichtung (22) des Portalhubwagens (10) erstreckt, und dass der Zwischenrahmen (21) mit zumindest einem Verschiebewagen (21a) ausgerüstet ist, der zur Bewegung entlang der Gleitschiene (22) montiert ist.

3. Führerkabine nach Anspruch 1 oder 2 für einen Portalhubwagen, **dadurch gekennzeichnet, dass** die Bremsvorrichtung (23) eine auf Reibungskraft basierende Reibungsbremse ist, die in einer Situation, bei der der Portalhubwagen (10) umkippt, so angeordnet ist, dass die Bewegungsenergie der Führerkabine (20) infolge des Bremsweges der Bewegung durch die Gleitschienen (22) in Wärmeenergie umgewandelt wird.

4. Führerkabine nach einem vorhergehenden Anspruch für einen Portalhubwagen, **dadurch gekennzeichnet, dass** die Bremsvorrichtung (23) eine mechanisch belastete Reibungsbremse ist.

5. Führerkabine nach einem vorhergehenden Anspruch für einen Portalhubwagen, **dadurch gekennzeichnet, dass** die Bremsvorrichtung (23) eine federbelastete Reibungsbremse ist.

6. Führerkabine nach einem der Ansprüche 3 bis 5 für einen Portalhubwagen, **dadurch gekennzeichnet, dass** in Richtung der kürzestmöglichen Bewegungsrichtung der Führerkabine (20) die durch die Bremsvorrichtung (23) bewirkte Reibungskraft höher ist als in Richtung der entgegen gesetzten möglichen Bewegungsrichtung.

**Revendications**

1. Cabine d'opérateur destinée à un chariot cavalier, lequel chariot cavalier (10) comprend un châssis en portique (11) incluant des montants de support (13a, 13b, 14a, 14b) substantiellement verticaux et un cadre supérieur (15) qui relie ces derniers au sommet, des roues (12), portant ledit châssis en portique (11), étant situées à l'extrémité inférieure desdits montants de support (13a, 13b, 14a, 14b) de chaque côté du chariot cavalier (10), de sorte que la cabine d'opérateur (20) est montée dans la partie avant dudit chariot cavalier (10) reposant sur le cadre supérieur (15), sur l'un des côtés de l'axe médian (L) dudit chariot cavalier (10) dans la direction de l'entraînement, **caractérisée par le fait que** la cabine d'opérateur (20) est montée de manière à reposer sur le cadre supérieur (15) du chariot cavalier (10) à l'aide d'un cadre intermédiaire distinct (21) qui est autorisé à se mouvoir dans la direction transversale du chariot cavalier dans une situation dans laquelle ledit chariot cavalier (10) culbute et le châssis en portique (11) vient percuter le sol, lequel cadre intermédiaire (21) est équipé d'un dispositif de freinage (23), ou de dispositifs de freinage correspondants, de manière à recevoir et à absorber l'énergie cinétique de la cabine d'opérateur (20), et à provoquer un mouvement commandé et une force de décélération, pour ladite cabine d'opérateur, préalablement à la cessation du mouvement dans une situation dans laquelle ledit chariot cavalier (10) culbute.

2. Cabine d'opérateur selon la revendication 1, destinée à un chariot cavalier et **caractérisée par le fait qu'**au moins une barre (22) de guidage coulissant, s'étendant dans la direction horizontale et dans la direction transversale (22) du chariot cavalier (10), est montée sur le cadre supérieur (15) dudit chariot cavalier (10), auquel elle est reliée, et que le cadre intermédiaire (21) est équipé d'au moins un traîneau (21a) qui est monté de manière à se mouvoir le long de ladite barre (22) de guidage coulissant.

3. Cabine d'opérateur selon la revendication 1 ou 2, destinée à un chariot cavalier et **caractérisée par le fait que** le dispositif de freinage (23) est un frein à friction fondé sur une force de friction et conçu, dans une situation dans laquelle le chariot cavalier (10) culbute, pour convertir l'énergie cinétique de ladite cabine d'opérateur (20) en énergie thermique du fait de la distance de déplacement freinée par les barres de guidage (22).

4. Cabine d'opérateur selon une quelconque revendication précédente, destinée à un chariot cavalier et **caractérisée par le fait que** le dispositif de freinage (23) est un frein à friction contraint mécaniquement.

5. Cabine d'opérateur selon une quelconque revendication précédente, destinée à un chariot cavalier et **caractérisée par le fait que** le dispositif de freinage (23) est un frein à friction contraint élastiquement.

6. Cabine d'opérateur selon l'une quelconque des revendications 3-5, destinée à un chariot cavalier et **caractérisée par le fait que** la force de friction développée par le dispositif de freinage (23) est plus grande, dans la direction de la plus petite distance de déplacement possible de ladite cabine d'opérateur (20), que dans la direction de la distance de déplacement possible dans le sens opposé.

Fig. 2

Fig. 1

Fig. 3

**EP 2 281 769 B1**

**Patent documents cited in the description**

- US 20030111281 A1